# EUROPÄISCHE PATENTANMELDUNG

(11) **EP 0 871 048 A1**
(43) Veröffentlichungstag der Anmeldung: **14.10.1998**
(21) Anmeldenummer: 98105814.2
(22) Anmeldetag: 30.03.1998
(51) Int. Cl.: G02B 6/38, G02B 6/42

(54) **Stecker für Lichtwellenleiterkabel und Buchsenteil für solche Stecker**

(30) Priorität: 10.04.1997 DE 19714969
(71) Anmelder: SIEMENS AKTIENGESELLSCHAFT, 80333 München (DE)
(72) Erfinder: Heimüller, Hans-Jost, 67373 Dudenhofen (DE); Birnbaum, Roland, 73433 Aalen (DE)

(57) **Zusammenfassung**

Der Stecker für ein Lichtwellenleiterkabel zeichnet sich durch eine auf der Lichtaustrittsseite des Steckers aufsitzende elastische Abdeckkappe (20) aus, deren Abdeckkappenboden (24) beim Einstecken in ein Buchsenteil vom Lichtwellenleiterkabel (10) durchstoßen wird. Die elastische Abdeckkappe (20) dient als Dicht- und Schutzelement. Beim Einstecken des Steckers in ein Buchsenteil (50; 60) bleibt die Abdeckkappe auf dem Stecker sitzen. Im Verlauf des Steckens wird die Abdeckkappe (20) durch einen Absatz (54; 64) in der Aufnahmebohrung (51, 61) des Buchsenteiles (50; 60) erfaßt und auf dem Stecker verschoben. Dabei reißt der Abdeckkappenboden auf und gibt die Ankoppelfläche des Lichtwellenleiterkabels (10) frei.

## Beschreibung

Die Erfindung betrifft einen Stecker für Lichtwellenleiterkabel mit einem in einer Steckerhülle 30 sitzenden Lichtwellenleiterkabel sowie mit einer auf der Lichtaustrittsseite des Steckers aufsitzenden Abdeckkappe 20, sowie ein Buchsenteil, in weiches ein solcher Stecker einführbar ist.

Ein Stecker für Lichtwellenleiterkabel ist beispielsweise in G 90 10 357.2 beschrieben. Der Stecker verfügt über eine Steckerhülle, die koaxial von einer Aufnahmebohrung durchsetzt ist, in weiche das Lichtwellenleiterkabel eingeschoben wird. Der Kabelkanal verjüngt sich innerhalb der Steckerhülle gegen die Stirnseite in drei Abschnitte, deren Durchmesser den Durchmessern des Außenmantels, des Innenmantels und des Faserkerns des Lichtwellenleiterkabels entsprechen. Die Steckerhülle ist einstückig aus Kunststoff gespritzt und weist einen zylindrischen Grundkörper auf, der stirnseitig in einen Zentrierstift übergeht und der sich zu einem Steckerstift verjüngt. In diesem Steckerstift sitzt nur noch die optische Faser.

Lichtwellenleiterkabel mit Stecker werden immer häufiger als Kommunikationskabel eingesetzt. Mittlerweile sind Lichtwellenleiterkabel mit Stecker als Verbindungskabel zwischen optische Signale verarbeitenden Geräte, wie z. B. Compakt-Disc-Player und Digital Audiotape Recorder, eingesetzt. Darüber hinaus wird auch versuchsweise bei Kraftfahrzeugen die Kommunikation der einzelnen Komponenten über optische Signale geführt. Hierfür besitzen die notwendigen Steuer- und Empfangsgeräte optische IN-/OUT-Anschlüsse, die z. B. aus einer Steckerbuchse bestehen, in die geräteinnenseitig ein Lichtleiterkabel mündet. Die Verbindung zwischen solchen Geräten erfolgt mittels eines Lichtwellenleiterkabels mit zwei endseitig angebrachten Steckern, die zur Herstellung einer Steckverbindung in eine Steckeraufnahme bzw. eine Aufnahmebohrung eines Buchsenteiles eingesetzt werden können.

Damit die Signalübertragung weitgehend verlustfrei und störsicher erfolgen kann, ist eine hohe mechanische Stabilität dieser Steckverbindung unerläßlich. Darüber hinaus ist es unbedingt notwendig, daß die Ankoppelfläche, d. h. die Lichtaustritts- bzw. Lichteintrittsseite des LWL-Steckers nicht verschmutzt, verkratzt oder dergleichen ist, weil sonst Nachteile im Signalübertragungsverhalten des Lichtwellenleiters auftreten. Dies kann so weit gehen, daß eine optische Signalübertragung überhaupt nicht mehr möglich ist.

Es ist deshalb notwendig, die Ankoppelfläche des LWL-Steckers ab der Fertigbearbeitung des kompletten Steckers, während des Transportes und der Verlegung bis zum Stecken in ein Buchsenteil vor Feuchtigkeit und Verschmutzung wirksam geschützt zu schützen. Außerdem wird für einige Applikationen eines solchen LWL-Steckers eine dichte Steckverbindung verlangt.

Um diese Bedingungen zu erfüllen, ist es mittlerweile üblich, auf die Steckerseite eines solchen LWL-Steckers zum Transportschutz eine Abdeckkappe aufzuschieben, die nach dem Transport vom Stecker abgezogen und anschließend weggeworfen wird. Das Abdichten bei solchen bekannten LWL-Steckern erfolgt mittels spezieller Kopf- oder Radialdichtungen.

Der Erfindung liegt die Aufgabe zugrunde, einen Stecker für ein Lichtwellenleiterkabel anzugeben, bei dem die Ankoppelfläche wirksam vor Feuchtigkeit und Verschmutzung geschützt ist. Darüber hinaus soll mit einem solchen Stecker eine dichte Steckverbindung beim Einstecken in ein Buchsenteil bzw. einen Gegenstecker erreichbar sein.

Diese Aufgabe wird bei dem eingangs genannten Stecker für ein Lichtwellenleiterkabel dadurch erreicht, daß die Abdeckkappe aus elastischem Material besteht und einen Abdeckkappenboden aufweist, welcher von der vorderen Stirnseite des Lichtwellenleiterkabels beim Einstecken in ein Buchsenteil durchstoßbar ist.

Zweckmäßigerweise weist die Steckerhülle zur Steckseite hin einen Bereich mit verringertem Durchmesser auf, welcher eine größere axiale Länge besitzt als die Abdeckkappe, wobei die Abdeckkappe über das vordere Ende dieses Bereiches gestülpt ist.

Wesentlich bei dem erfindungsgemäßen Stecker für ein Lichtwellenleiterkabel ist die Ausgestaltung des Abdeckkappenbodens der Abdeckkappe. Der Abdeckkappenboden ist nämlich so gestaltet, daß er bei Belastung an definierten Stellen aufreißt. Hierdurch kann das Lichtwellenleiterkabel, wenn es bei festgehaltener Abdeckkappe in Richtung Abdeckkappenboden gedrückt wird, den Abdeckkappenboden durchstoßen, wobei sich der aufgerissene Abdeckkappenboden aufgrund seiner elastischen Gestaltung um das Lichtwellenleiterkabel herum anschmiegt.

Damit die Abdeckkappe beim Einschieben in ein Buchsenteil tatsächlich festgehalten wird, ist im Buchsenteil eine Aufnahmebohrung für den Stecker vorgesehen. Die Aufnahmebohrung weist mindestens eine ringförmigen Absatz auf, an welchem beim Einschieben des LWL-Steckers die Abdeckkappe hängen bleibt und damit gehalten wird.

Gemäß der Erfindung wird also nach der Endbearbeitung der Ankoppelfläche des Lichtwellenleiterkabels eine Abdeckkappe aus elastischem Material auf die Steckseite des Steckers geschoben. Der Abdeckkappenboden der Abdeckkappe ist dabei so gestaltet, daß er bei Belastung an definierten Stellen aufreißt. Beim Stecken des LWL-Steckers in eine Aufnahmebohrung eines passenden Buchsenteiles bleibt die Abdeckkappe im Gegensatz zu den bisher verwendeten Wegwerfkappen auf dem Stecker. Beim Einschieben des Steckers in die Aufnahmebohrung des Buchsenteiles wird die Abdeckkappe durch den erwähnten Absatz in der Aufnahmebohrung erfaßt und auf dem Stecker relativ in Richtung Kabelaustrittsseite verschoben. Hierbei reißt der Abdeckkappenboden auf und gibt die Ankoppelfläche frei. Gegen Ende des Steckvorganges wird die Abdeckkappe in axialer Richtung zusammengedrückt und dichtet dadurch den Stecker zum Buchsenteil hin ab. Beim Trennen der Steckverbindung bleibt die am Abdeckkappenboden aufgerissene Abdeckkappe in der erreichten Position und dient nur noch als Dichtung. Damit bei Trennen der Steckverbindung die Abdeckkappe tatsächlich aus dem Buchsenteil herausgezogen wird, verfügt die Steckerhülle an ihrem vorderen Ende über eine äußere Mantelfläche, die eine nach außen hervorspringende Schulter aufweist, durch welche die Abdeckkappe mitnehmbar ist, wenn der Stecker aus dem Aufnahmeloch des Buchsenteiles herausgezogen wird.

In einer Weiterbildung der Erfindung wird durch die besondere Ausbildung des Steckers und der Abdeckkappe erreicht, daß beim Ziehen des Steckers die Abdeckkappe an ihre ursprüngliche Position zurückgezogen wird. Bei ausreichender Elastizität des Abdeckkappenbodens schließt sich dieser wieder so weit, daß die Auskoppelfläche der optischen Faser zumindest staubdicht abgedeckt ist. Hierdurch ist die empfindliche optische Ankoppelfläche des LWL-Steckers auch im Servicefall gegen Verschmutzung geschützt.

Der erfindungsgemäße Stecker für ein Lichtwellenleiterkabel und das Buchsenteil für einen solchen Stecker wird nachfolgend anhand von Ausführungsbeispielen und zugehörenden Figuren näher erläutert. Es zeigen:
- Fig. 1: ein Ausführungsbeispiel eines Steckers nach der Erfindung in Draufsicht und teilweise gebrochener Ansicht im Bereich der Steckseite,
- Fig. 2: ein erstes Ausführungsbeispiel eines als Kupplungselement ausgebildeten Buchsenteiles, in welches zwei Stecker nach Fig. 1 einschiebbar sind,
- Fig. 3: ein zweites Ausführungsbeispiel eines Buchsenteiles nach der Erfindung, wobei das Buchsenteil als Hybridbuchsenteil ausgebildet ist, in welches sowohl ein Stecker für Lichtwellenleiterkabel gemäß Fig. 1 und ein herkömmlicher Stecker einschiebbar ist,
- Fig. 4: ein weiteres Ausführungsbeispiel eines Steckers in Detailansicht des vorderen Steckbereiches bei noch nicht vollständig in die Steckerhülle eingechobenen Lichtwellenleiter, und
- Fig. 5: die Detailansicht von Fig. 4, jedoch mit vollständig in die Steckerhülle eingeschobenen Lichtwellenleiter.

In den nachfolgenden Figuren bezeichnen, sofern nicht anders angegeben, gleiche Bezugszeichen gleiche Teile mit gleicher Bedeutung.

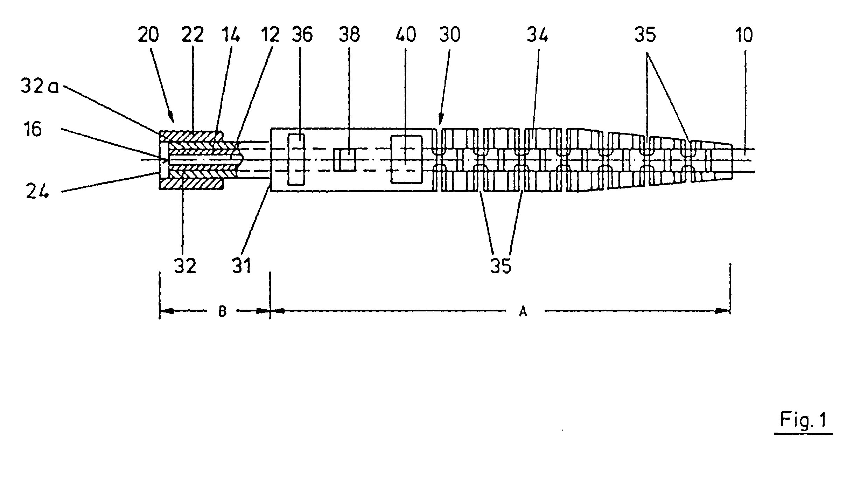

Der in Fig. 1 beispielhaft dargestellte Stecker für Lichtwellenleiterkabel weist eine Steckerhülle 30, die über ihre gesamte axiale Länge von einer zentralen Durchgangsbohrung durchsetzt ist, auf. In dieser Durchgangsbohrung sitzt ein Lichtwellenleiterkabel 10, dessen optische Ankoppelfläche 16 bzw. Faserstirnfläche mindestens annähernd bündig mit dem vorderen Ende der Steckerhülle 30 abschließt.

Die Steckerhülle 30, die beispielsweise aus thermoplastischem Kunststoff gebildet sein kann, weist einen verhältnismäßig langen Griffbereich A auf, von dem sich in Richtung Steckseite des Steckers ein rohrförmiger Fortsatz 32 anschließt. Wie Fig. 1 zeigt, ist der Übergang vom Griffbereich A zum Bereich B durch eine ringförmige Schulter 31 begrenzt. Die Längen des Griffbereiches A zum Bereich B verhalten sich etwa 5:1.

Wie die teilweise aufgebrochene Ansicht der Steckseite des Steckers zeigt, weist das Lichtwellenleiterkabel 10 eine zentrale optische Faser 12 und einen diese Faser 12 koaxial umgebenden Kabelmantel 14 auf. Der Kabelmantel 14 wiederum ist koaxial von dem rohrförmigen Fortsatz 32 der Steckerhülle 30 umgeben. Der rohrförmige Fortsatz 32 der Steckerhülle 30 verfügt an seinem zur Steckseite hin gewandten vorderen Ende über eine äußere Mantelfläche, an der eine ringförmige Schulter hervorspringt. Diese ringförmige Schulter ist mit dem Bezugszeichen 32a bezeichnet.

Auf der Steckseite des Steckers sitzt eine Abdeckkappe 20 auf, welche aus einem elastischen Material, z. B. Gummi, gebildet ist. Die Abdeckkappe 20 besteht aus einem ringförmigen Abdeckkappenbereich 22, der sowohl das Lichtwellenleiterkabel 10 als auch den rohrförmigen Fortsatz 32 der Steckerhülle 30 koaxial umgibt. Dieser rohrförmige Fortsatz 32 erstreckt sich über den mit B bezeichneten Bereich. Der Abdeckkappenboden 24, der orthogonal zur Längserstreckung des Steckers ausgerichtet ist und einstückig mit dem ringförmigen Abdeckkappenbereich 22 in Verbindung steht, ist verhältnismäßig dünnwandig ausgebildet. Die Dicke des Abdeckkappenbodens 24 ist so gewählt, daß es beim Festhalten der Abdeckkappe 22 in einfacher Weise möglich ist, diesen Abdeckkappenboden 24 zu durchstoßen, wenn die Steckerhülle 30 in der Darstellung von Fig. 1 nach links bewegt wird.

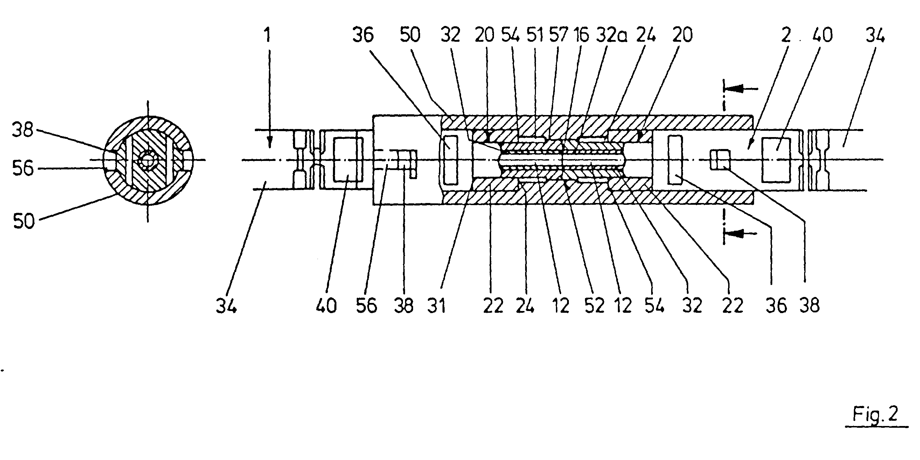

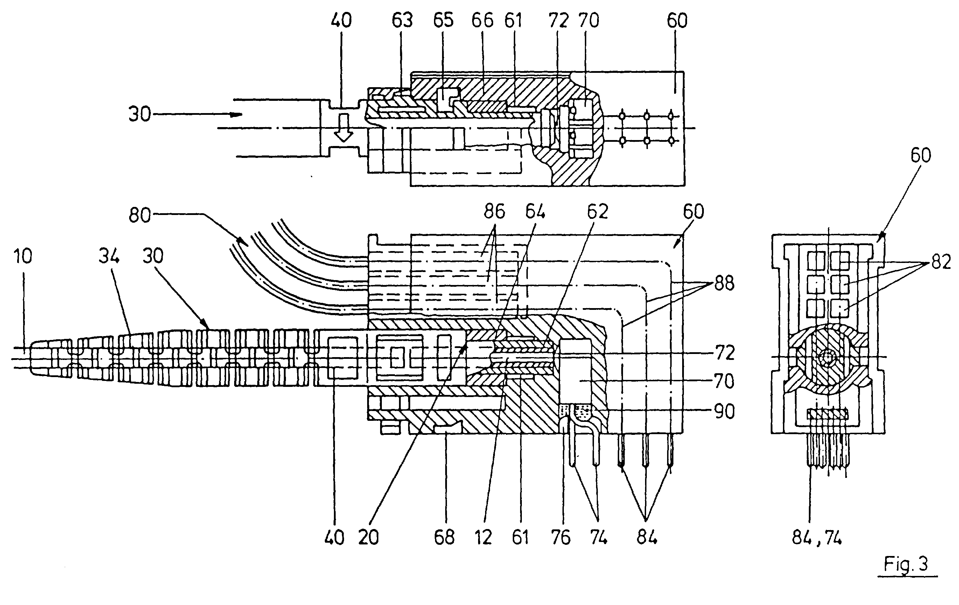

Wie die Darstellung von Fig. 1 weiter zeigt, weist der rohrförmige Fortsatz 32 der Steckerhülle 30 eine größere Länge auf als der ringförmige Abdeckkappenbereich 22. Der Grund hierfür wird im Zusammenhang mit der Erläuterung der Fig. 2 und 3 deutlich.

Wenngleich oben erwähnt wurde, daß der ringförmige Fortsatz 32 vorzugsweise einstückig an die Steckerhülle 30 angeformt ist, kann dies auch auf andere geeignete Weise realisiert werden.

Vorzugsweise ist die äußere Mantelfläche des ringförmigen Fortsatzes 32 aufgerauht, mit einem Art Gewinde oder ähnlichem, so daß die Abdeckkappe 22 einen besseren Halt auf dem Fortsatz 32 findet.

Der Griffbereich A der Steckerhülle 30 weist noch Nuten bzw. Ausnehmungen 36 für Sekundärsicherungshaken eines Buchsenteiles auf. Darüber hinaus weist der Griffbereich A der Steckerhülle 30 eine vorzugsweise gefederte Verriegelungsnase 38 auf. Zusätzlich ist noch eine Schlüsselfläche 40 vorhanden, an welcher ein Entriegelungswerkzeug ansetzbar ist. Der zur Kabelaustrittseite hingewandte Bereich der Steckerhülle 30 ist mit einem Knickschutzteil 34 versehen, welcher in regelmäßigen Abständen Einkerbungen 35 aufweist. Zur Kabelaustrittseite verjüngt sich die Steckerhülle 30 zunehmend.

In Fig. 2 ist ein erstes Ausführungsbeispiel eines Buchsenteiles, in welches der erläuterte Stecker für ein Lichtwellenleiterkabel einsetzbar ist, dargestellt. Das dargestellte Buchsenteil ist als Kupplungselement ausgebildet, in welches von zwei gegenüberliegenden Seiten jeweils ein gemäß Fig. 1 ausgestalteter Stecker einschiebbar ist. Das Buchsenteil ist nachfolgend mit dem Bezugszeichen 50 versehen und weist eine über die gesamte Länge des Buchsenteiles 50 hindurchlaufende Aufnahmebohrung 51 auf. Das Buchsenteil 50 ist symmetrisch gestaltet, so daß nachfolgend nur auf den linken Teil des Buchsenteiles 50 Bezug genommen wird.

Das Buchsenteil 50 zeichnet sich zur Mitte hin durch einen zwei ringförmige Absätze aufweisenden verjüngten Durchmesser auf. Der verjüngte Durchmesser der Aufnahmebohrung 51 wird in jeder Buchsenteilhälfte durch zwei ringförmige Absätze 54, 57 gebildet, wobei der ringförmige Absatz 57 näher an der Buchsenteilmitte liegt.

Der ringförmige Absatz 54 verjüngt die Aufnahmebohrung 51 des Buchsenteiles 50 derart, daß die Abdeckkappe 20 beim Einschieben des Steckers in die Aufnahmebohrung 51 festgehalten wird und bei einem weiteren Schiebevorgang der Lichtwellenleiter 10 samt rohrförmigen Fortsatz 32 den Abdeckkappenboden 24 durchstößt und ein kurzes Weiterschieben des Steckers möglich ist. Der ringförmige Absatz 57 ist so gewählt, daß die Aufnahmebohrung 51 einen Durchmesser aufweist, der in etwa dem Außendurchmesser der hervorspringenden Schulter 32a des Fortsatzes 32 entspricht.

In Fig. 2 befinden sich die beiden Stecker 1 und 2 innerhalb des Buchsenteiles 50 im Sollzustand, d. h., daß sich die beiden Stecker 1, 2 stirnseitig mit ihren Ankoppelflächen berühren. Das Buchsenteil 50 weist zusätzlich Einführungsnuten 56 auf, in welche die erwähnten Verriegelungsnasen 38 des Steckers einführbar sind.

Wie aus der Darstellung von Fig. 2 deutlich erkennbar, befindet sich die Abdeckkappe 20 vom vorderen Ende des Lichtwellenleiterkabels bzw. des rohrförmigen Fortsatzes 32 nach hinten zur Kabelaustrittsseite zurückversetzt. Die Abdeckkappe wird beim Einsetzen in die Aufnahmebohrung 51 des Buchsenteiles 50 nämlich an dem erwähnten Absatz 54 festgehalten. Einen hinteren Anschlag findet die durchstoßene Abdeckkappe 20 an der Schulter 31 der Steckerhülle 30. Beim Herausziehen der Steckerhülle 30 aus der Aufnahmebohrung 51 des Buchsenteiles 50 sorgt die ringförmig hervorspringende Schulter 32a des Fortsatzes 32 für eine Mitnahme der durchstoßenen Abdeckkappe 20. Die Abdeckkappe wird hierbei bis nahe an ihre ursprüngliche Position geschoben. Bei ausreichender Elastizität des Abdeckkappenbodens schließt sich dieser aufgrund der herunterfallenden Lappen des Abdeckkappenbodens so weit, daß die Ankoppelfläche der optischen Faser zumindest staubdicht abgedeckt ist.

Fig. 3 zeigt ein weiteres Buchsenteil 60, in welches der Stecker von Fig. 1 einsetzbar ist. Das Buchsenteil 60 ist jetzt als Hybridsteckmodulgehäuse ausgebildet zur Aufnahme des erläuterten Steckers und zur Aufnahme eines herkömmlichen Steckers, der mit Zuleitungen 80 und Kontaktstiften 86 versehen ist. Die Kontaktstifte 86 werden in Kontaktbuchsen 82, die in das Hybridsteckmodulgehäuse 60 integriert sind, eingesteckt. Die Kontaktbuchsen 82 stehen über elektrische Verbindungen mit Anschlußklemmen 84, hier Lötanschlüsse, in Kontakt. Das Hybridsteckmodulgehäuse 60 verfügt darüber hinaus über eine Aufnahmebohrung 61 zur Aufnahme des in Fig. 1 erläuterten Steckers. Die Aufnahmebohrung 61 endet endseitig mit einer Faserzentrierung 62, die durch einen Wandabschnitt gebildet ist, der mindestens annähernd dem Durchmesser des vorderen Teiles der Steckerhülle 30 entspricht. Darüber hinaus weist die Aufnahmebohrung 61 einen ringförmigen Absatz 64 auf, an dem die Abdeckkappe 20 in bereits erläuterter Weise hängenbleibt, sobald der Stecker in die Aufnahmebohrung 61 geschoben wird.

Das Hybridsteckmodulgehäuse 60 verfügt über eine weitere Öffnung 76, in der eine Sende- und Empfangslogik 70 mit integrierter Sende- und Empfangsdiode 72 sitzt. Die Sende- und/oder Empfangsdiode 72 steht der Ankoppelfläche der optischen Faser 12 des Lichtwellenleiterkabels 10 direkt gegenüber, so daß eine optimale Lichtaus- bzw. -einkopplung möglich ist. Die Sende- und Empfangslogik 70 ist aus Dichtgründen von einer Vergußmasse 90 umgeben. Die Sende- und Empfangslogik 70 weist Anschlußklemmen 74, hier ebenfalls Lötanschlüsse, auf, die aus dem Hybridsteckmodulgehäuse 60 herausragen.

Zusätzlich verfügt das Hybridsteckmodulgehäuse 60 über eine Ausnehmung 63, in die die Verriegelungsnase 38 des Steckers einrastet. Des weiteren ist ein Sekundärsicherungselement 65 vorgesehen, das in der Ausnehmung 36 des Steckers einrastet. Schließlich weist das Hybridsteckmodulgehäuse 60 noch einen Vorzentrier- und Schutzkragen 66 für den optischen Stecker auf.

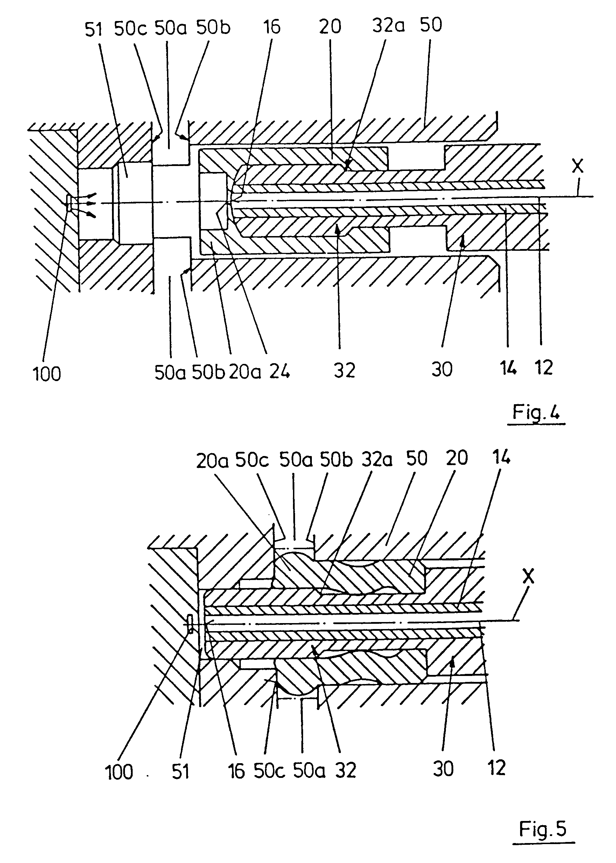

Im Zusammenhang mit den Figuren 4 und 5 wird ein weiteres Ausführungsbeispiel eines Steckers nach der Erfindung beschrieben. In Figur 4 ist die Steckerhülle 30 des Lichtwellenleiterkabels mit der optischen Faser 12 und dem Kabelmantel samt vorderen, bereits beschriebenen rohrförmigen Fortsatz 32 noch nicht vollständig in die Aufnahmebohrung 51 des Buchsenteiles 50 eingeschoben. Die auf dem rohrförmigen Fortsatz 32 der Steckerhülle 30 sitzende elastische Abdeckkappe 20 übergreift mit ihrem hinteren Teil die ringförmige Schulter 32a des rohrförmigen Fortsatzes 32. Mit ihrem vorderen Teil umschließt die elastische Abdeckkappe 20 mit dem hierfür vorgesehenen und zu durchstoßenden Abdeckkappenboden 24 die Faseranschnittfläche 16 der optischen Faser 12 des Lichtwellenleiterkabels. Im Gegensatz zu den vorhergehenden Ausführungsbeispielen weist die elastische Andeckkappe 20 eine am Rand des Abdeckkappenbodens 24 ringförmig in Richtung Steckseite hervorspringende Schulter 20a auf.

Wie Figur 4 zeigt, weist das Buchsenteil 50 eine Ringnut 50a oder eine partielle Öffnung auf. Diese Ringnut 50a ist von zwei gegenüberliegenden und orthogonal zur Einsteckrichtung des Lichtwellenleiters ausgerichtete Wende 50b, 50c begrenzt, wobei die tiefer in der Aufnahmeöffnung 51 des Buchsenteiles 50 liegende Wand 50c näher zur Mittenachse X des Buchsenteiles 50 ragt. Hierdurch ist im weiter innen liegenden Bereich des Buchsenteiles 50 eine Verengung gebildet, an welcher beim Einschieben des Lichtwellenleiterkabels samt Abdeckkappe 20 letztere anstößt und nicht mehr weiter in das Innere des Buchsenteiles 50 geschoben werden kann.

Im Ausführungsbeispiel von Figur 4 ist der Vollständigkeit halber noch ein optisches Sende- bzw. Empfangselement 100 dargestellt, die mit der Faseranschnittfläche 16 des Lichtwellenleiters zu koppeln ist.

In Figur 5 ist das Lichtwellenleiterkabel vollständig in die Aufnahmeöffnung 51 des Buchsenteiles 50 eingeschoben. Die Faseranschnittfläche 16 liegt unmittelbar gegenüber dem optischen Sende- bzw. Empfangselement 100. Wie die Schnittansicht von Figur 5 zeigt, ist die elastische Abdeckkappe 20 mit ihrer ringförmigen Schulter 20a in die Ringnut 50a gepreßt, so daß die Abdeckkappe 20 in dieser Lage festgehalten ist. Das Lichtwellenleiterkabel selbst hat bei Einschieben in die Aufnahmeöffnung 51 den Abdeckkappenboden 24 durchstoßen.

Wenn das Lichtwellenleiterkabel, beispielsweise zu Reparaturzwecken, wieder aus dem Buchsenteil 50 herausgezogen wird, bewegt sich zunächst die Steckerhülle 30 relativ zur Abdeckkappe 20 nach rechts, weil die Abdeckkappe 20 in der Ringnut 50a festgehalten ist. Diese Relativbewegung bleibt so lange erhalten, bis die Schulter 32a am hinteren Ende der elastischen Abdeckkappe 20 angelangt ist und dann die Abdeckkappe 20 mitnimmt. Ergebnis ist, daß sich die Abdeckkappe 20 wieder in ihrer Ausgangslage, wie in Figur 4 dargestellt, auf dem rohrförmigen Fortsatz 32 der Steckerhülle 30 befindet. Der Abdeckkappenboden 24 ist zwar durchstoßen, legt sich jedoch bei ausreichender Elastizität wieder um die vordere Faserstirnfläche 16 des Lichtwellenleiterkabels, so daß zumindest ein staubdichter Abschluß sichergestellt ist.

### Bezugszeichenliste

- 1: Stecker
- 2: Stecker
- 10: Lichtwellenleiterkabel
- 12: optische Faser
- 14: Kabelmantel
- 16: Faseranschnittsfläche
- 20: elastische Abdeckkappe
- 20a: ringförmige Schulter
- 22: ringförmiger Abdeckkappenbereich
- 24: Abdeckkappenboden
- 30: Steckerhülle
- 31: Schulter
- 32: rohrförmiger Fortsatz
- 32a: Schulter
- 34: Knickschutzteil
- 36: Nuten für Sekundärsicherung
- 38: Verriegelungsnase
- 40: Schlüsselfläche
- 50: Hülse, Buchsenteil
- 50a: Ringnut
- 50b: Wand
- 50c: Wand
- 51: Aufnahmebohrung
- 52: Faserzentrierung
- 54: ringförmiger Absatz
- 56: Einführungsnut
- 57: ringförmiger Absatz
- 60: Hybridsteckmodulgehäuse
- 61: Aufnahmebohrung
- 62: Faserzentrierung
- 63: Ausnehmung
- 64: ringförmiger Absatz
- 65: Sekundärsicherungselement
- 66: Vorzentrierung
- 67: ringförmiger Absatz
- 68: Verriegelungshaken
- 70: Sende- und Empfangslogik
- 72: Sende- und Empfangslogik
- 74: Anschlußklemmen
- 76: Öffnung
- 80: Zuleitungen
- 82: Kontaktbuchsen
- 84: Anschlußklemmen
- 86: Kontakte
- 88: elektrische Verbindungen
- 90: Vergußmasse
- 100: Sende- oder Empfangselement
- A: Griffbereich
- B: Bereich

## Patentansprüche

1. Stecker für Lichtwellenleiterkabel mit einem in einer Steckerhülle (30) sitzenden Lichtwellenleiterkabel sowie mit einer auf der Lichtaustrittsseite des Steckers aufsitzenden Abdeckkappe (20),
**dadurch gekennzeichnet**, daß die Abdeckkappe (20) aus elastischem Material gebildet ist und einen Abdeckkappenboden (24) aufweist, welcher von der vorderen Stirnseite des Lichtwellenleiterkabels (10) beim Einstecken in ein Buchsenteil (50, 60) durchstoßbar ist.

2. Stecker nach Anspruch 1,
**dadurch gekennzeichnet**, daß die Steckerhülle (30) einen zur vorderen Steckerseite hin zugewandten rohrförmigen Fortsatz (32) mit verringertem Durchmesser aufweist, daß dieser Bereich (32) eine größere axiale Länge aufweist als die Abdeckkappe (20) und daß die Abdeckkappe über das distale Ende dieses Bereiches gestülpt ist.

3. Stecker nach Anspruch 2,
**dadurch gekennzeichnet**, daß der Fortsatz (32) eine das Lichtwellenleiterkabel (10) koaxial umgebende Ummantelung ist mit einer äußeren Mantelfläche, die an ihrem zur Lichtaustrittsseite zugewandten Ende mit einer ringförmig hervorspringenden Schulter (32a) versehen ist.

4. Stecker nach Anspruch 2 oder 3,
**dadurch gekennzeichnet**, daß der Bereich mit verringertem Durchmesser einstückig an die Steckerhülle (30) angeformt ist.

5. Stecker nach einem der Ansprüche 1 bis 4,
**dadurch gekennzeichnet**, daß die Steckerhülle (30) mindestens eine Verriegelungsnase (38) aufweist.

6. Stecker nach einem der Ansprüche 1 bis 5,
**dadurch gekennzeichnet**, daß die Steckerhülle (30) mindestens eine Ausnehmung oder Nut (36) für eine Sekundärsicherung aufweist.

7. Stecker nach einem der Ansprüche 1 bis 6,
**dadurch gekennzeichnet**, daß die Steckerhülle (30) mindestens eine Schlüsselfläche zum Ansetzen eines Entriegelungswerkzeuges aufweist.

8. Stecker nach einem der Ansprüche 1 bis 7,
**dadurch gekennzeichnet**, daß die Steckerhülle (30) zur Kabelaustrittsseite hin einen Knickschutzbereich (34) aufweist.

9. Buchsenteil für einen Stecker nach einem der Ansprüche 1 bis 8,
**dadurch gekennzeichnet**, daß das Buchsenteil (50; 60) eine Aufnahmebohrung (51; 61) für den Stecker aufweist, und daß die Aufnahmebohrung (51; 61) mindestens einen ringförmigen Absatz (54; 64) aufweist, an welchem beim Einschieben des Steckers die Abdeckkappe (20) gehalten wird.

10. Buchsenteil nach Anspruch 9,
**dadurch gekennzeichnet**, daß die Aufnahmebohrung (51; 61) einen Zweiten in Steckrichtung gesehen noch tiefer in dem Buchsenteil (51, 61) liegenden ringformigen Absatz (57; 67) aufweist, welcher die Aufnahmebohrung (51; 61) weiter verjüngt.

11. Buchsenteil nach Anspruch 9 oder 10,
**dadurch gekennzeichnet**, daß das Buchsenteil (50) symmetrisch ausgebildet ist und eine durchgehende Aufnahmebohrung (51) aufweist, in welcher von zwei gegenüberliegenden Seiten her jeweils ein Stecker einschiebbar ist.

12. Buchsenteil nach Anspruch 11,
**dadurch gekennzeichnet**, daß das Buchsenteil (60) eine Öffnung (76) aufweist, in welcher ein optisches Sende- und/oder Empfangselement (72) derart einsetzbar ist, daß dieses mit der Lichtaustritts- und/oder Lichteinfallsseite an einen in die Aufnahmebohrung (61) eingesteckten Stecker lichtgekoppelt ist.

13. Buchsenteil nach Anspruch 12,
**dadurch gekennzeichnet**, daß in der Öffnung (76) neben dem Sende- und/oder Empfangselement (72) eine Sende- und/oder Empfangslogik untergebracht ist.

14. Buchsenteil nach einem der Ansprüche 9 bis 13,
**dadurch gekennzeichnet**, daß das Buchsenteil (50; 60) eine Ausnehmung (56, 63) zur Aufnahme einer Verriegelungsnase (38) des Steckers aufweist.

15. Buchsenteil nach einem der Ansprüche 9 bis 16,
**dadurch gekennzeichnet**, daß das Buchsenteil (60) ein Sekundärsicherungselement (65) zum Einhaken oder Einschieben in eine Ausnehmung (36) des Steckers aufweist.

16. Buchsenteil nach einem der Ansprüche 9 bis 15,
**dadurch gekennzeichnet**, daß das Buchsenteil (60) als Hybridbuchsenteil ausgebildet ist zur Aufnahme sowohl eines Steckers für ein Lichtwellenleiterkabel (10) als auch Kontakte (86) eines herkömmlichen Steckers für elektrische Verbindungen.

17. Buchsenteil nach einem der Ansprüche 1 bis 16,
**dadurch gekennzeichnet**, daß Mittel vorgesehen sind, durch die die Abdeckkappe (20) beim Herausziehen des Steckers aus dem Buchsenteil in ihre ursprüngliche Position zurückgeschoben wird.
